# EUROPÄISCHE PATENTANMELDUNG

(11) **EP 4 016 231 A1**
(43) Veröffentlichungstag der Anmeldung: **22.06.2022**
(21) Anmeldenummer: 21212454.9
(22) Anmeldetag: 06.12.2021
(51) Int. Cl.: G05D 1/02, B60W 30/00, B61L 25/00

(54) **VERFAHREN ZUM STEUERN EINER VORRICHTUNG**

(30) Priorität: 16.12.2020 DE 102020216014
(71) Anmelder: Siemens Mobility GmbH, 81739 München (DE)
(72) Erfinder: Braband, Jens, 38106 Braunschweig (DE)

(57) **Zusammenfassung**

Die Erfindung betrifft ein Verfahren (100) zum Steuern einer Bewegung einer Vorrichtung (200) entlang einer Verfahrstrecke (201) mit einer Recheneinheit (203), umfassend:
- Erkennen (101) eines Objekts (O1, O2, O3) in einer Umgebung der Bewegungsstecke (201) und Ermitteln von Eigenschaften (E1', E2', E3') des Objekts (O1, O2, O3) durch eine zweite Recheneinheit (205) basierend auf Sensorsignalen wenigstens einer Sensoreinheit (207);
- Vergleichen (103) wenigstens einer Eigenschaft (P1', P2', P3') der durch die zweite Recheneinheit (205) ermittelten Eigenschaften (E1', E2', E3') des Objekts (O1, O2, O3) mit einer entsprechenden Referenz (P1, P2, P3) durch die Recheneinheit (203); und
- Steuern (105) der Bewegung der Vorrichtung (201) entlang der Verfahrstrecke (201) unter Berücksichtigung der durch die zweite Recheneinheit (205) ermittelten Eigenschaften (E1', E2', E3') des Objekts (O1, O2, O3) durch die Recheneinheit (203), wenn die wenigstens eine Eigenschaft (P1', P2', P3') der durch die zweite Recheneinheit (205) ermittelten Eigenschaften (E1', E2', E3') des Objekts (O1, O2, O3) eine vorgegebene Ähnlichkeit zu der Referenz (P1, P2, P3) aufweist.

## Beschreibung

Die Erfindung betrifft ein Verfahren zum Steuern einer Bewegung einer Vorrichtung mit einer Recheneinheit. Außerdem betrifft die Erfindung eine Recheneinheit und ein System mit einer Recheneinheit zum Ausführen des Verfahrens zum Steuern einer Bewegung einer Vorrichtung mit einer Recheneinheit.

Anwendungen, die eine künstliche Intelligenz verwenden, sind derzeit nicht für sicherheitsrelevante Prozesse zugelassen. Aufgrund der analytisch nicht nachvollziehbaren Funktionsweise der künstlichen Intelligenzen sind diese zur Gewährleitung der Sicherheit in ihrer Funktionsweise entsprechend zu überprüfen und im Betrieb zu überwachen.

Hierzu können beispielsweise redundante künstliche Intelligenzen verwendet werden, bei denen überkreuz Ergebnisse der einen künstlichen Intelligenz zur Überprüfung der Ergebnisse der jeweils anderen künstlichen Intelligenz verwendet werden. Dies bedarf jedoch eine redundante Verwendung von Software und gegebenenfalls Hardware, was beides sowohl die Kosten als auch die Komplexität eines solchen Systems erhöhen.

Der Erfindung liegt die Aufgabe zugrunde, ein verbessertes Verfahren zum Steuern eines Stellgliedes einer Vorrichtung mit einer Recheneinheit. Der Erfindung liegt ferner die Aufgabe zugrunde eine Recheneinheit und ein System mit einer Recheneinheit zum Ausführen des Verfahrens bereitzustellen.

Diese Aufgabe wird durch ein Verfahren zum Steuern einer Bewegung einer Vorrichtung entlang einer Verfahrstrecke mit einer Recheneinheit, eine Recheneinheit und ein System mit einer Recheneinheit der unabhängigen Ansprüche gelöst. Vorteilhafte Ausgestaltungen sind in den Unteransprüchen angegeben.

Nach einem Aspekt der Erfindung wird ein Verfahren zum Steuern einer Bewegung einer Vorrichtung entlang einer Verfahrstrecke mit einer Recheneinheit bereitgestellt, wobei das Verfahren umfasst:
- Erkennen eines Objekts in einer Umgebung der Bewegungsstecke und Ermitteln von Eigenschaften des Objekts durch eine zweite Recheneinheit basierend auf Sensorsignalen wenigstens einer Sensoreinheit;
- Vergleichen wenigstens einer Eigenschaft der durch die zweite Recheneinheit ermittelten Eigenschaften des Objekts mit einer entsprechenden Referenz durch die Recheneinheit; und
- Steuern der Bewegung der Vorrichtung entlang der Verfahrstrecke unter Berücksichtigung der durch die zweite Recheneinheit ermittelten Eigenschaften des Objekts durch die Recheneinheit, wenn die wenigstens eine Eigenschaft der durch die zweite Recheneinheit ermittelten Eigenschaften des Objekts eine vorgegebene Ähnlichkeit zu der Referenz aufweist.

Hierdurch kann der technische Vorteil erreicht werden, dass ein verbessertes Verfahren zum Steuern einer Bewegung einer Vorrichtung entlang einer Bewegungsstrecke mit einer Rechnereinheit bereitgestellt werden kann, bei der die Qualität und Funktionsfähigkeit einer Objekterkennung, auf deren Basis die Steuerung der Vorrichtung durchgeführt wird, überprüft werden kann. Hierzu wird eine Objekterkennung von Objekten in einer Umgebung einer Verfahrstrecke, entlang der die Bewegung der Vorrichtung durchgeführt wird, bewirkt und für die erkannten Objekte werden Eigenschaften ermittelt. Zur Überprüfung der Objekterkennung werden darauffolgend Eigenschaften, beziehungsweise wenigstens eine der bestimmten Eigenschaften, der erkannten Objekte, beziehungsweise wenigstens eines erkannten Objekts, entsprechenden Referenzen verglichen. Die Steuerung der Bewegung der Vorrichtung entlang der Bewegungsstrecke wird dann unter Berücksichtigung der im Zuge der Objekterkennung bestimmten Eigenschaften des erkannten Objekts beziehungsweise der erkannten Objekte durchgeführt, wenn die mit der Referenz verglichenen Eigenschaften des Objekts eine vorgegebene Ähnlichkeit zu der jeweiligen Referenz aufweisen. Durch das Vergleichen der durch die zweite Recheneinheit ermittelten Eigenschaften der erkannten Objekte mit entsprechenden Referenzen kann die Qualität der Objekterkennung während der Steuerung der Vorrichtung überprüft werden. Darüber hinaus kann eine gesicherte Steuerung der Vorrichtung basierend auf der Objekterkennung durch die zweite Recheneinheit gewährleistet werden, indem die Steuerung der Bewegung der Vorrichtung in Abhängigkeit der Übereinstimmung der in der Objekterkennung ermittelten Eigenschaften der erkannten Objekte mit den jeweiligen Referenzen durchgeführt wird. Die Referenzen bzw. die vorgegebenen Ähnlichkeiten geben hierbei einen Gütefaktor der Objekterkennung.

Eine Recheneinheit umfasst im Sinne der Anmeldung ein Softwaremodul und/oder eine Hardwarekomponente einer Datenverarbeitungsanlage.

Nach einer Ausführungsform umfasst das Verfahren ferner:
- Bereitstellen eines weiteren Objekts in einer weiteren Umgebung der Verfahrstrecke, wobei in der weiteren Umgebung kein Objekt angeordnet ist;
- Erkennen des weiteren Objekts und Ermitteln von Eigenschaften des weiteren Objekts durch die zweite Recheneinheit basierend auf Sensorsignalen der Sensoreinheit;
- Vergleichen wenigstens einer Eigenschaft der durch die zweite Recheneinheit ermittelten Eigenschaften des weiteren Objekts mit einer weiteren Referenzen durch die Recheneinheit; und
- Steuern der Bewegung der Vorrichtung entlang der Verfahrstrecke unter Berücksichtigung der durch die zweite Recheneinheit ermittelten Eigenschaften des Objekts durch die Recheneinheit, wenn die wenigstens eine Eigenschaft der durch die zweite Recheneinheit ermittelten Eigenschaften des weiteren Objekts eine vorgegebene Ähnlichkeit zu der weiteren Referenz aufweist.

Hierdurch kann der technische Vorteil erreicht werden, dass eine weitere Verbesserung der Steuerung der Bewegung der Vorrichtung und insbesondere eine weitere Verbesserung der Sicherheit der Steuerung der Bewegung der Vorrichtung bereitgestellt werden kann. Hierzu wird ein weiteres Objekt in einer weiteren Umgebung der Bewegungsstrecke bereitgestellt, in der zuvor kein Objekt angeordnet war. Während der Steuerung der Bewegung der Vorrichtung entlang der Bewegungsstrecke wird eine Objekterkennung des weiteren Objekts durchgeführt und entsprechende Eigenschaften des weiteren Objekts ermittelt. Darauffolgend werden Eigenschaften, beziehungsweise wenigstens eine der in der Objekterkennung bestimmten Eigenschaften, des weiteren Objekts mit einer weiteren Referenz verglichen. Eine Steuerung der Vorrichtung entlang der Bewegungsstrecke wird darauffolgend unter Berücksichtigung der ermittelten Eigenschaften des Objekts beziehungsweis der Objekte durchgeführt, wenn eine Übereinstimmung der wenigstens einen Eigenschaft des weiteren Objekts mit der weiteren Referenz einer vorbestimmten Ähnlichkeit entspricht. Durch das Bereitstellen des weiteren Objekts kann somit eine Umgebung der Bewegungsstrecke mit entsprechenden Objekten versehen werden, in der vorher keine Objekte angeordnet waren. Somit kann eine lückenlose Bereitstellung von Objekten entlang der Verfahrstrecke der Vorrichtung bereitgestellt werden. Somit kann anhand der entlang der Verfahrstrecke angeordneten Objekte eine lückenlose Überprüfung der Objekterkennung durch die zweite Recheneinheit vorgenommen werden. Das bereitgestellte weitere Objekt dient hierbei ausschließlich zur Überprüfung der Objekterkennung und die Steuerung der Bewegung der Vorrichtung wird ausschließlich unter Berücksichtigung der bereits vorhandenen Objekte durchgeführt.

Nach einer Ausführungsform umfasst das Steuern der Vorrichtung:
Reduzieren einer Geschwindigkeit der Vorrichtung und/oder ausgeben eines Warnsignals, wenn die wenigstens eine Eigenschaft der durch die zweite Recheneinheit ermittelten Eigenschaften des Objekts nicht die vorgegebene Ähnlichkeit zu der Referenz aufweist, und/oder wenn die wenigstens eine Eigenschaft der durch die zweite Recheneinheit ermittelten Eigenschaften des weiteren Objekts nicht die vorgegebene Ähnlichkeit zu der weiteren Referenz aufweist.

Hierdurch kann der technische Vorteil erreicht werden, dass eine gesicherte Steuerung der Bewegung der Vorrichtung bereitgestellt werden kann. Werden bei dem Vergleichen der ermittelten Eigenschaften der Objekte bzw. der weiteren Objekte mit den jeweiligen Referenzen erkannt, dass die vorbestimmte Ähnlichkeit zwischen den ermittelten Eigenschaften und den jeweiligen Referenzen nicht vorliegen, wird eine Geschwindigkeit der Vorrichtung reduziert und/oder ein Warnsignal ausgegeben.

Ein Nichtübereinstimmen der in der Objekterkennung ermittelten Eigenschaften der Objekte mit den jeweiligen Referenzen wird erfindungsgemäß als eine Fehlfunktion bzw. unzureichende Qualität der Objekterkennung interpretiert. In einem solchen Fall wird folglich eine Geschwindigkeit reduziert bzw. ein Warnsignal ausgegeben, um eine Steuerung der Vorrichtung basierend auf einer unzureichenden Objekterkennung zu vermeiden.

Nach einer Ausführungsform ist die Referenz durch wenigstens eine vorbekannte Eigenschaft des Objekts gegeben, und/oder wobei die weitere Referenz durch wenigstens eine vorbekannte Eigenschaft des weiteren Objekts gegeben ist.

Hierdurch kann der technische Vorteil erreicht werden, dass eine präzise Überprüfung der Qualität bzw. Funktionsweise der Objekterkennung und damit verbunden eine sichere Steuerung der Vorrichtung bereitgestellt werden kann. Indem die während der Objekterkennung ermittelten Eigenschaften der Objekte mit vorbekannten Eigenschaften der Objekte in Form der jeweiligen Referenzen verglichen werden, kann überprüft werden, ob die während der Objekterkennung ermittelten Eigenschaften den tatsächlichen Eigenschaften der Objekte entsprechen. Hierdurch kann eine Qualität und Funktionsweise der Objekterkennung überprüft werden.

Eine vorbekannte Eigenschaft ist im Sinne der Anmeldung eine Eigenschaft des jeweiligen Objekts, die vor der Durchführung der Objekterkennung der Recheneinheit bekannt bzw. dieser bereitgestellt ist.

Nach einer Ausführungsform ist das Objekt als ein Gebäude, eine Streckenbegrenzung, eine Streckenbeschilderung, eine Signalleuchte oder eine Vegetation ausgebildet ist, wobei das weitere Objekt als eine Signaltafel ausgebildet ist, wobei die Eigenschaften und die vorbekannten Eigenschaften des Objekts und/oder die Eigenschaften und die vorbekannten Eigenschaften des weiteren Objekts eine Position des Objekts und/oder des weiteren Objekts relativ zur Verfahrstrecke und/oder eine Markierung oder eine Signalcharakteristik des Objekts und/oder des weiteren Objekts umfassen.

Hierdurch kann der technische Vorteil erreicht werden, dass eine präzise Steuerung der Vorrichtung entlang der Verfahrstrecke basierend auf der Objekterkennung der in der Umgebung der Verfahrstrecke angeordneten Objekte ermöglicht ist. Die Objekte bzw. die weiteren Objekte sind hierbei als entlang der Verfahrstrecke angeordnete immobile Gegenstände ausgebildet. Eine Steuerung basierend auf einer Objekterkennung der Objekte bzw. weiteren Objekte kann hierbei eine Position der Objekte bzw. weiteren Objekte relativ zur Verfahrstrecke, Markierung oder Signalcharakteristiken der Objekte bzw. weiteren Objekte berücksichtigen.

Nach einer Ausführungsform sind die vorbekannten Eigenschaften des Objekts und/oder die vorbekannten Eigenschaften des weiteren Objekts der Recheneinheit in einer Kartendarstellung der Verfahrstrecke bereitgestellt.

Hierdurch kann der technische Vorteil erreicht werden, dass der Recheneinheit eine detaillierte Beschreibung der an der Verfahrstrecke angeordneten Objekte inklusive der vorbekannten Eigenschaften der Objekte bzw. weiteren Objekte. Hierauf basierend kann ein präziser Vergleich der während der Objekterkennung ermittelten Eigenschaften der Objekte bzw. weiteren Objekte mit den bereits vorbekannten Eigenschaften der Objekte bzw. weiteren Objekte durchgeführt werden. Hierauf basierend kann eine präzise Ermittlung der Qualität bzw. Funktionsweise der Objekterkennung erreicht und damit zusammenhängend eine sichere Steuerung der Vorrichtung bewirkt werden.

Nach einer Ausführungsform umfasst das Verfahren ferner: Abgleichen von in der Kartendarstellung angeführten Objekten mit von der zweiten Recheneinheit erkannten Objekten; und Reduzieren der Geschwindigkeit der Vorrichtung und/oder Ausgeben eines Warnsignals, wenn durch die zweite Recheneinheit ein in der Kartendarstellung angeführtes Objekt nicht erkannt wird.

Hierdurch kann der technische Vorteil erreicht werden, dass eine weitere Sicherung der Steuerung der Vorrichtung bewirkt werden kann, indem unter Berücksichtigung der in der Kartendarstellung aufgeführten Objekte ein Nichterkennen von Objekten durch die Objekterkennung durch die zweite Recheneinheit ermittelt werden kann. Als Folge eines im Zuge die Objekterkennung der zweiten Recheneinheit nicht erkannten Objekts, wird die Geschwindigkeit der Vorrichtung reduziert und/oder ein Warnsignal ausgegeben.

Nach einer Ausführungsform wird bei dem Vergleich der durch die zweite Recheneinheit ermittelten Eigenschaft des Objekts und/oder des weiteren Objekts mit der Referenz und/oder der weiteren Referenz ein Abstand zwischen der Vorrichtung und dem Objekt und/oder dem weiteren Objekt berücksichtigt, und wobei mit abnehmendem Abstand zwischen der Vorrichtung und dem Objekt und/oder dem weiteren Objekt ein Wert der vorgegebenen Ähnlichkeit zwischen der durch die zweite Recheneinheit ermittelten Eigenschaft des Objekts und der Referenz und/oder zwischen der durch die zweite Recheneinheit ermittelten Eigenschaft des weiteren Objekts und der weiteren Referenz erhöht wird.

Hierdurch kann der technische Vorteil erreicht werden, dass eine präzise und gesicherte Steuerung basierend auf einer Objekterkennung einer Mehrzahl von entlang der Verfahrstrecke angeordneten Objekten bereitgestellt werden kann. Insbesondere kann die Funktionsweise und Qualität der Objekterkennung basierend auf einer Mehrzahl von Vergleichen einer Mehrzahl von in der Objekterkennung ermittelten Eigenschaften einer Mehrzahl von Objekten mit entsprechenden Referenzen überprüft werden. Durch die Mehrzahl von berücksichtigten Eigenschaften kann somit die Überprüfung der Funktionsweise der Objekterkennung präzisiert werden, indem bei Übereinstimmung der überprüften Eigenschaften mit den jeweiligen Referenzen mit einer höheren Wahrscheinlichkeit die Richtigkeit der restlichen im Zuge der Objekterkennung bestimmten Eigenschaften vorhergesagt werden kann.

Nach einer Ausführungsform werden durch die zweite Recheneinheit basierend auf den Sensorsignalen der Sensoreinheit eine Mehrzahl von Objekten erkannt und für jedes Objekt Eigenschaften ermittelt, wobei durch die Recheneinheit für jedes Objekt eine Mehrzahl von durch die zweite Recheneinheit ermittelte Eigenschaften mit einer Mehrzahl von Referenzen verglichen wird, und wobei die Steuerung der Vorrichtung basierend auf den Eigenschaften der Mehrzahl von Objekten gesteuert wird, wenn für wenigstens ein Objekt der Mehrzahl von Objekten die ermittelten Eigenschaften zu den entsprechenden Referenzen die vorbestimmte Ähnlichkeit aufweisen.

Hierdurch kann der technische Vorteil erreicht werden, dass die Überprüfung der Funktionsweise der Objekterkennung weiter präzisiert werden kann. Hierzu wird die Bewegung der Vorrichtung entlang der Verfahrstrecke berücksichtigt, durch die während des Verfahrens Abstände der Vorrichtung zu verschiedenen entlang der Verfahrstrecke angeordneten Objekten zeitlich verändert wird, so dass verschiedene Objekte unterschiedliche Abstände zur Vorrichtung aufweisen. Für Objekte mit einem geringen Abstand zur Vorrichtung, für die eine präzisere Objekterkennung zu erwarten ist, wird folglich die zu erreichende Ähnlichkeit zwischen den in der Objekterkennung ermittelten Eigenschaften und den jeweiligen Referenzen erhöht. Für Objekte mit größerem Abstand, für die eine weniger detaillierte Objekterkennung zu erwarten ist, wird hingegen eine geringere Ähnlichkeit der ermittelten Eigenschaften zu den jeweiligen Referenzen verlangt. Hierdurch kann die Überprüfung der Qualität und Funktionsweise der Objekterkennung weiter präzisiert werden.

Nach einer Ausführungsform umfasst die zweite Recheneinheit wenigstens eine zur Objekterkennung und Ermittlung von Eigenschaften trainierte künstliche Intelligenz.

Hierdurch kann der technische Vorteil erreicht werden, dass eine präzise, leistungsfähige und verlässliche Objekterkennung basierend auf Sensordaten bereitgestellt werden kann.

Nach einer Ausführungsform umfasst die Sensoreinheit eine optische Sensoreinheit und/oder eine Radarsensoreinheit, und wobei die Eigenschaften der Objekte optisch und/oder radartechnisch detektierbare Eigenschaften sind.

Hierdurch kann der technische Vorteil erreicht werden, dass eine präzise Objekterkennung ermöglicht ist.

Nach einer Ausführungsform ist die Vorrichtung ein Fahrzeug, ein Schienenfahrzeug oder ein Roboter.

Hierdurch kann der technische Vorteil erreicht werden, dass ein gesichertes auf einer Objekterkennung basierendes Steuerungsverfahren für ein Fahrzeug, ein Schienenfahrzeug oder einen Roboter bereitgestellt werden kann.

Nach einem zweiten Aspekt wird ein Computerprogrammprodukt umfassend Befehle bereitgestellt, die bei der Ausführung des Programms durch eine Recheneinheit diese veranlassen, das erfindungsgemäße Verfahren nach einer der voranstehenden Ausführungsformen auszuführen.

Nach einem dritten Aspekt wird Recheneinheit bereitgestellt, die ausgebildet sind, um ein Verfahren nach einer voranstehenden Ausführungsformen auszuführen.

Nach einem vierten Aspekt wird ein System mit einer Recheneinheit und einer zweiten Recheneinheit bereitgestellt, die ausgebildet sind, das erfindungsgemäße Verfahren nach einer der voranstehenden Ausführungsformen auszuführen.

Die oben beschriebenen Eigenschaften und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung
- FIG 1: eine graphische Darstellung eines Verfahrens zum Steuern einer Vorrichtung entlang einer Verfahrstrecke mit einer Recheneinheit gemäß einer Ausführungsform;
- FIG 2: ein Ablaufdiagramm eines Verfahrens zum Steuern einer Vorrichtung entlang einer Verfahrstrecke mit einer Recheneinheit gemäß einer Ausführungsform; und
- FIG 3: eine schematische Darstellung eines Computerprogrammprodukts.

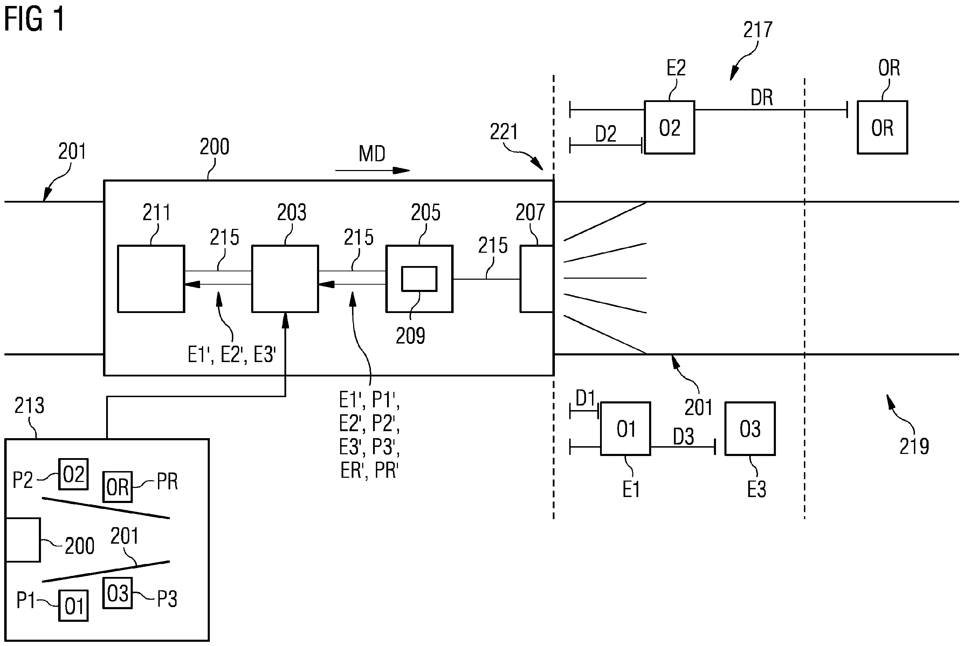

FIG 1 zeigt eine graphische Darstellung eines Verfahrens 100 zum Steuern einer Vorrichtung 200 entlang einer Verfahrstrecke 201 mit einer Recheneinheit 203 gemäß einer Ausführungsform.

In Figur 1 ist eine Draufsicht sich einer entlang einer Verfahrstrecke 201 in einer Bewegungsrichtung MD bewegenden Vorrichtung 200 gezeigt. Rechts und links entlang der Fahrstrecke 201 sind eine Mehrzahl von Objekten O1, O2, O3, OR angeordnet.

Zur Ausführung des Verfahrens 100 zur Steuerung einer Bewegung der Vorrichtung 200 entlang einer Verfahrstrecke 201 umfasst die Vorrichtung 200 eine Recheneinheit 203, die insbesondere eingerichtet ist, eine Überprüfung der Objekterkennung durchzuführen. Ferner umfasst die Vorrichtung 200 eine zweite Recheneinheit 205, die eingerichtet ist, die Objekterkennung der entlang der Verfahrstrecke 201 angeordneten Objekte O1, O2, O3, OR durchzuführen. Ferner umfasst die Vorrichtung 200 eine Sensoreinheit 207 zum Detektieren der Objekte O1, O2, O3, OR basierend auf Sensorsignalen der Sensoreinheit 207.

Die Vorrichtung 200 kann beispielsweise ein Fahrzeug oder ein Roboter sein, das/der entlang einer entsprechenden Fahrbahn bewegt wird. Alternativ kann die Vorrichtung 200 ein Schienenfahrzeug sein, das auf einer als Schienenweg ausgebildeten Verfahrstrecke 201 bewegt wird.

Die Objekte O1, O2, O3 können beispielsweise entlang der Verfahrstrecke 201 angeordnete unbewegliche Objekte, wie Gebäude, Fahrbahnbegrenzungen, Verkehrsschilder, Signalschilder bzw. Leuchten, Gleisschranken oder Vegetation sein.

Das erfindungsgemäße Verfahren 100 zum Steuern einer Bewegung einer Vorrichtung 200 entlang einer Verfahrstrecke 201 mit einer Recheneinheit 203 basiert auf der Idee einer Steuerung der Vorrichtung 200 basierend auf einer Objekterkennung von Objekten, die entlang der Verfahrstrecke 201 angeordnet sind. Zum Bereitstellen einer gesicherten Steuerung der Vorrichtung 200 entlang der Verfahrstrecke 201 basiert das Verfahren 100 ferner auf der Idee, eine Funktionsweise der Objekterkennung unter Berücksichtigung vorbekannter Information bzgl. der entlang der Verfahrstrecke angeordneten Objekten O1, O2, O3 zu überprüfen.

Zur Objekterkennung weist die Vorrichtung 200 in einem Frontbereich 221 wenigstens eine Sensoreinheit 207 auf, die mittels entsprechender Sensorsignale eingerichtet ist, die Objekte O1, O2, O3, OR entlang der Verfahrstrecke 201 zu detektieren. Die Sensoreinheit 207 kann beispielsweise ein visueller Sensor, beispielsweise eine RGB-Kamera, eine Stereokamera oder ein Lidarsystem umfassen. Alternativ oder zusätzlich kann die Sensoreinheit 207 beispielsweise einen Radarsensor umfassen.

In der gezeigten Ausführungsform umfasst die zweite Recheneinheit 205 ferner eine trainierte künstliche Intelligenz 209, die für eine Objekterkennung und eine Ermittlung von Merkmalen der erkannten Objekte trainiert ist. Die künstliche Intelligenz 209 kann beispielsweise durch ein entsprechend trainiertes künstliches neuronales Netz ausgebildet sein. Beispielsweise kann das künstliche neuronale Netz als ein convonutional neural netwerk ausgebildet sein.

Die Recheneinheit 203 weist in der gezeigten Ausführungsform ferner eine Kartendarstellung 213 der Verfahrstrecke 201 auf. In der Kartendarstellung 213 sind die unbeweglich entlang der Verfahrstrecke 201 angeordneten Objekte O1, O2, O3, OR berücksichtigt. Ferner sind in der Kartendarstellung für jedes Objekt O1, O2, O3, OR wenigstens eine Eigenschaft P1, P2, P3, PR der einzelnen Objekte O1, O2, O3, OR berücksichtigt. Die Kartendarstellung 213 kann beispielsweise gemäß einer Kartendarstellung eines Navigationssystems eingerichtet sein, mittels der der Recheneinheit 203 Informationen bzgl. der Verfahrstrecke 201 bzw. der entlang der Verfahrstrecke 201 angeordneten Objekte O1, O2, O3, OR bereitgestellt ist. Über die Kartendarstellung 213 verfügt die Recheneinheit 203 somit über vorbekannte Eigenschaften P1, P2, P3, PR der einzelnen Objekte O1, O2, O3, OR.

Die Vorrichtung 200 umfasst ferner ein Stellglied 211, mittels dem eine Steuerung der Vorrichtung 200 bewirkt werden kann. Das Stellglied 201 kann beispielsweise in Form einer Motorsteuerung gegeben sein.

In der gezeigten Ausführungsform sind die Objekte O1, O2, O3 in einer Umgebung 217 der Verfahrstrecke 201 angeordnet. Das weitere Objekt OR ist ferner in einer weiteren Umgebung 219 der Verfahrstrecke 201 angeordnet, in der kein anderes Objekt O1, O2, O3 angeordnet ist.

Die einzelnen Objekte O1, O2, O3, OR weisen jeweils individuelle Eigenschaften E1, E2, E3, ER auf, die mittels der Objekterkennung der zweiten Recheneinheit 205 ermittelbar sind.

In der gezeigten Ausführungsform weisen die einzelnen Objekte O1, O2, O3, OR jeweils individuelle Abstände D1, D2, D3, DR zur Vorrichtung 200 auf.

Zur Steuerung der Vorrichtung 200 entlang der Verfahrstrecke 201 wird durch die zweite Vorrichtung 205, insbesondere durch die entsprechend trainierte künstliche Intelligenz 209, eine Objekterkennung der Objekte O1, O2, O3, OR basierend auf Sensorsignalen der Sensoreinheit 207 durchgeführt. Im Zuge der Objekterkennung erkennt die zweite Recheneinheit 205 die Objekte O1, O2, O3 und das weitere Objekt OR und ermittelt für jedes der erkannten Objekte entsprechende Eigenschaften E1', E2', E3', ER'. Die durch die zweite Recheneinheit 205 ermittelten Eigenschaften E1', E2', E3', ER' werden über die Datenverbindung 215 an die Recheneinheit 203 weitergeleitet.

Zum Überprüfen der Qualität bzw. Funktionsweise der Objekterkennung ist die Recheneinheit 203 eingerichtet, für jedes der erkannten Objekte wenigstens eine Eigenschaft P1', P2', P3', PR' der durch die zweite Recheneinheit 205 ermittelten Eigenschaften E1', E2', E3', ER' mit entsprechenden vorbekannten Eigenschaften P1, P2, P3, PR der Kartendarstellung 213 zu vergleichen.

Wird während des Vergleichens durch die Recheneinheit 203 ermittelt, dass die durch die zweite Recheneinheit 205 im Zuge der Objekterkennung ermittelten Eigenschaften P1', P2', P3', PR' eine vorbestimmte Ähnlichkeit zu den jeweiligen vorbekannten Eigenschaften P1, P2, P3, PR der Kartendarstellung 213 aufweisen, so wird eine Steuerung der Vorrichtung 200 basierend auf den im Zuge der Objekterkennung durch die zweite Recheneinheit 205 ermittelten Eigenschaften E1', E2', E3' der Objekte O1, O2, O3 bewirkt.

Eine Beurteilung der Ähnlichkeit zwischen den durch die zweite Recheneinheit ermittelten Eigenschaften P1', P2', P3', PR' mit den jeweiligen vorbekannten Eigenschaften P1, P2, P3, PR der Kartendarstellung 213 kann eine Berücksichtigung der im Zuge der Objekterkennung für jede ermittelte Eigenschaft generierten Konfidenzwerte umfassen. Eine während der Objekterkennung ermittelte Eigenschaft P1', P2', P3', PR', die zwar der entsprechenden vorbekannten Eigenschaft P1, P2, P3, PR entspricht, jedoch in der Objekterkennung mit einem geringen Konfidenzwert ausgestattet wurde, weist im Sinne der Anmeldung nur eine geringe Ähnlichkeit zu der jeweiligen vorbekannten Eigenschaft P1, P2, P3, PR auf. Eigenschaften, die hingegen in der Objekterkennung mit einem hohen Konfidenzwert versehen wurden und den jeweiligen vorgenkannten Eigenschaften P1, P2, P3, PR der Kartendarstellung 213 entsprechen, weisen im Sinne der Anmeldung eine hohe Ähnlichkeit zu den jeweiligen vorbekannten Eigenschaften auf. Eigenschaften P1', P2', P3', PR, die hingegen den vorbekannten Eigenschaften P1, P2, P3, PR nicht entsprechen, werden offensichtlich unabhängig von den jeweiligen Konfidenzwerten mit einer geringen Ähnlichkeit bewertet.

Gemäß einer Ausführungsform kann durch die Recheneinheit 203 eine beliebige Anzahl von während der Objekterkennung durch die zweite Recheneinheit 205 ermittelten Eigenschaften E1', E2', E3', ER' mit entsprechenden vorbekannten Eigenschaften der Kartendarstellung 213 verglichen werden.

Weisen die jeweils durch die zweite Recheneinheit 205 ermittelten Eigenschaften P1', P2', P3', PR' die vorbestimmte Ähnlichkeit zu den jeweils vorbekannten Eigenschaften der Kartendarstellung 213 auf, so wird die Objekterkennung durch die zweite Recheneinheit 205 als funktionsfähig und mit der erwarteten Qualität beurteilt, und eine Steuerung der Vorrichtung 200 basierend auf der Objekterkennung durch die zweite Recheneinheit 205 durchgeführt. Diese Beurteilung der Funktionsweise der Objekterkennung basiert auf der Annahme, dass bei Übereinstimmung der ermittelten Eigenschaften P1', P2', P3', PR' mit den jeweils vorbekannten Eigenschaften P1, P2, P3, PR auch die restlichen, oder zumindest einer Mehrzahl der restlichen, bestimmten Eigenschaften E1', E2', E3', ER' mit einer bestimmbaren Wahrscheinlichkeit den tatsächlichen Eigenschaften E1, E2, E3, ER der Objekte O1, O2, O3, OR entsprechen. Je mehr der ermittelten Eigenschaften P1', P2', P3', PR' somit mit den vorbekannten Eigenschaften P1, P2, P3, PR verglichen werden können, desto höher ist die Wahrscheinlichkeit, der Vorhersage der Korrektheit der restlichen nicht überprüften Eigenschaften. Die Anzahl der überprüfbaren Eigenschaften wird hierbei durch die Anzahl der Eigenschaften P1, P2, P3, PR bestimmt, die für jedes Objekt O1, O2, O3, OR vorbekannt sind.

Weisen die durch die zweite Recheneinheit 205 ermittelten Eigenschaften P1', P2', P3', PR' der erkannten Objekte O1, O2, O3, OR nicht die vorbestimmten Ähnlichkeiten zu den jeweiligen vorbekannten Eigenschaften P1, P2, P3, PR auf, so wird die Objekterkennung als fehlerhaft bzw. nicht mit der gewünschten Qualität beurteilt und eine Steuerung der Vorrichtung 200 basierend auf den ermittelten Eigenschaften E1', E2', E3' nicht durchgeführt. Alternativ kann eine Geschwindigkeit der Vorrichtung 200 reduziert bzw. ein Warnsignal ausgegeben werden.

Basierend auf der Kartendarstellung 213 der Verfahrstrecke 201 und den entlang der Verfahrstrecke 201 angeordneten Objekten O1, O2, O3, OR kann durch die Recheneinheit 203 eine Überprüfung der durch die zweite Recheneinheit 205 im Zuge der Objekterkennung erkannten Objekte durchgeführt werden. Durch Abgleich der in der Kartendarstellung 213 angeführten Objekten O1, O2, O3, OR mit den durch die zweite Recheneinheit 205 erkannte Objekte O1, O2, O3, OR kann somit durch die Recheneinheit 203 festgestellt werden, ob alle entlang der Fahrstrecke 201 angeordneten Objekte durch die Objekterkennung erkannt wurden. Bei Nichterkennung eines Objekts durch die zweite Recheneinheit 205 kann im Folgenden ebenfalls eine Geschwindigkeit der Vorrichtung 200 reduziert bzw. ein Warnsignal ausgegeben werden.

Die während der Objekterkennung durch die zweite Recheneinheit 205 ermittelten Eigenschaften E1', E2', E3', ER' der einzelnen Objekte O1, O2, O3, OR können beispielsweise eine Position der Objekte O1, O2, O3, OR relativ zur Vorrichtung 200 bzw. visuell detektierbare Markierungen umfassen. Die Markierungen können beispielsweise Signalmarkierungen inklusive visuelle Warnsignale oder Markierungszeichen sein. Diese können insbesondere bei Objekten als Fahrbahnmarkierungen, Fahrbahnbeschilderungen oder Verkehrsschilder angebracht sein.

Die weiteren Objekte OR können insbesondere als entsprechend ausgebildete Signaltafeln mit visuell detektierbaren Markierungen ausgebildet sein. Die weiteren Objekte OR dienen primär zur Überprüfung der Funktionsfähigkeit bzw. Qualität der Objekterkennung und müssen nicht zwingend eine zusätzliche Funktion zur Verkehrsregelung der Fahrzeuge bzw. Schienenfahrzeuge auf den jeweiligen Verfahrstrecken aufweisen. Die als Fahrbahnbeschilderung ausgebildeten Objekte O1, O2, O3 sind im Sinne der Anmeldung hingegen primär als Verkehrsschilder ausgebildet und weisen optische Markierungen auf, die primär zur Regelung des Verkehrs beispielsweise in Form von Geschwindigkeitsbeschränkungen, Warnhinweisen oder sonstigen Verkehrsinformationen umfassen.

Gemäß einer Ausführungsform kann die zweite Recheneinheit 205 ferner eingerichtet sein, eine Abstandsbestimmung bzw. eine Positionsbestimmung in der entlang der Verfahrstrecke 201 angeordneten Objekte O1, O2, O3, OR relativ zur Vorrichtung 200 durchzuführen. Hierzu kann die Sensoreinheit 207 beispielsweise ein Lidarsystem umfassen, auf Basis dessen eine Positionsbestimmung bzw. Abstandsbestimmung der einzelnen Objekte O1, O2, O3, OR ermöglicht ist. Alternativ oder zusätzlich kann die künstliche Intelligenz 209 ausgebildet sein, basierend auf den Sensorsignalen der Sensoreinheit 207 eine Abstandsbestimmung durchzuführen.

Ferner ist die Vorrichtung 200, beispielsweise über die Recheneinheit 203, eingerichtet, eine Positionierung der Vorrichtung 200 relativ zur Verfahrstrecke 201 durchzuführen. Diese kann basierend auf der Kartendarstellung 213, die gemäß einer Ausführungsform unter Berücksichtigung eines Navigationssystems bereitgestellt ist, bewirkt werden. Hierüber kann eine relative Positionierung zwischen den Objekten der Kartendarstellung 213 und der Vorrichtung 200 vorgenommen werden. Hierauf basierend können die über die Objekterkennung bestimmten Positionen der entlang der Verfahrstrecke 201 angeordneten Objekte O1, O2, O3, OR mit den gemäß der Kartendarstellung 213 bestimmten relativen Positionen der Objekte O1, O2, O3, OR verglichen werden. Dies kann unter Berücksichtigung von entsprechend erstellten Wahrscheinlichkeitsverteilungen der Positionen der einzelnen Objekte bewirkt werden.

Während des Verfahrens der Vorrichtung 200 entlang der Verfahrstrecke 201 kann somit eine Objekterkennung der entlang der Verfahrstrecke 201 angeordneten Objekte O1, O2, O3, OR basierend auf Sensorsignalen der Sensoreinheit 207 durchgeführt werden. Während der Objekterkennung können für die erkannten Objekte entsprechende Eigenschaften E1', E2', E3', ER' bestimmt werden, wobei die Eigenschaften der einzelnen Objekte hierbei untereinander variieren können und eine beliebige Anzahl von verschiedenen Eigenschaften E1' bis ER' ermittelt werden können. Durch die Recheneinheit 203 können darauffolgend zur Überprüfung der Qualität und Funktionsweise der Objekterkennung einzelne Eigenschaften P1', P2', P3', PR' der durch die zweite Recheneinheit 205 ermittelten Eigenschaften der einzelnen Objekten mit vorbekannten Eigenschaften P1, P2, P3, PR basierend auf einer Kartendarstellung 213 der Verfahrstrecke 201 inklusive der an der Verfahrstrecke 201 angeordneten Objekte O1, O2, O3, OR verglichen werden. Entsprechen die durch die zweite Recheneinheit 205 ermittelten Eigenschaften P1' bis PR' den entsprechenden vorbekannten Eigenschaften P1, P2, P3, PR der jeweiligen Objekte O1, O2, O3, OR gemäß einer vorbestimmten Ähnlichkeit, wird die Objekterkennung als Funktionsfähig und einer gewünschten Qualität entsprechend bewertet und eine Steuerung der Vorrichtung 200 basierend auf den durch die zweite Recheneinheit 205 ermittelten Eigenschaften E1', E2', E3', ER' der Objekte O1, O2, O3, OR durchgeführt. Mithilfe der Recheneinheit kann für jedes Objekt O1, O2, O3, OR eine beliebige Anzahl von durch die zweite Recheneinheit 205 ermittelten Eigenschaften P1' bis PR' mit entsprechenden vorbekannten Eigenschaften P1, P2, P3, PR verglichen werden. Maßgeblich für die Anzahl der im Vergleich berücksichtigten Eigenschaften der einzelnen Objekte ist hierbei die Anzahl der vorbekannten Eigenschaften P1, P2, P3, PR für jedes erkannte Objekt O1, O2, O3, OR.

Alternativ zu der Kartendarstellung 213 können die vorbekannten Eigenschaften P1, P2, P3, PR der einzelnen Objekte der Recheneinheit 203 auch in einer anderen Form bereitgestellt sein.

Im weiteren Bereich 219 der Verfahrstrecke 201, in der naturgemäß zunächst keinen Objekte O1, O2, O3 angeordnet sind, die für eine Überprüfung der Objekterkennung verwendet werden kann, weil entweder in diesen Bereichen gar keine Objekte angeordnet sind, oder von den angeordneten Objekte keine Eigenschaften vorbekannt sind, kann eine beliebige Anzahl von weiteren Objekten OR angeordnet werden, um somit eine lückenlose Bereitstellung von Objekten entlang der Verfahrstrecke 201 zu gewährleisten, um somit eine lückenlose Überprüfung der Funktionsweise bzw. Qualität der Objekterkennung durch die zweite Recheneinheit 205 zu gewährleisten.

Alternativ zu der gezeigten Ausführungsform kann die Vorrichtung 200 mit einer beliebigen Anzahl von Sensoreinheiten 207 ausgestattet sein, die neben dem Frontbereich 221 an beliebigen Bereichen der Vorrichtung 200 angeordnet sind. Darüber hinaus kann die zweite Recheneinheit 205 eine Mehrzahl von künstlichen Intelligenzen 209, insbesondere künstlichen neuronalen Netzen, umfassen, die jeweils eingerichtet sind, entsprechende Objekterkennungen durchzuführen.

Neben der Objekterkennung der entlang der Verfahrstrecke 201 angeordneten Objekte O1, O2, O3, OR, ist die zweite Recheneinheit 205 ferner eingerichtet, Objekte, die sich innerhalb der Verfahrstrecke 201 befinden ebenfalls zu erkennen. Derartige Objekte können beispielsweise andere Fahrzeuge bzw. Schienenfahrzeuge oder Roboter sein. Alternativ können derartige Objekte Fahrbahnbeschränkungen wie beispielsweise Bahnschranken sein. Alternativ können derartige Objekte Fußgänger, Fahrradfahrer oder Tiere sein, die sich auf der Verfahrstrecke 201 befinden.

Die in der gezeigten Ausführungsform angeführten Objekte können in Anzahl, Gestalt wie auch Anzahl der Eigenschaften und vorbekannten Eigenschaften von dem Besprochenen abweichen.

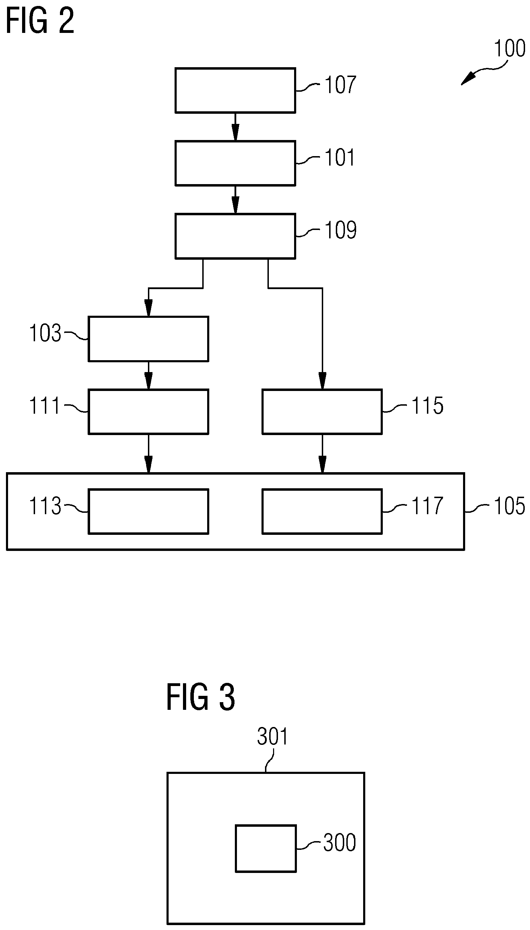

FIG 2 zeigt ein Ablaufdiagramm des Verfahrens 100 zum Steuern einer Vorrichtung 200 entlang einer Verfahrstrecke 201 mit einer Recheneinheit 203 gemäß einer Ausführungsform.

Das Verfahren 100 zur Steuerung einer Bewegung einer Vorrichtung 200 entlang einer Verfahrstrecke 201 mit einer Recheneinheit 203 wird mit Bezug auf die Beschreibung zu Figur 1 beschrieben und ist auf eine Vorrichtung 200 gemäß der in Figur 1 gezeigten Ausführungsform anwendbar.

Zur Steuerung der Vorrichtung 200 wird zunächst in einem Verfahrensschritt 107 ein weiteres Objekt OR in einer weiteren Umgebung 219 der Verfahrstrecke 209 angeordnet. Die weitere Umgebung 219 ist hierbei dadurch gekennzeichnet, dass in dieser kein Objekt O1, O2, O3 angeordnet ist.

Das Bereitstellen des weiteren Objekts OR bzw. einer Mehrzahl von weiteren Objekten OR kann insbesondere vor der Bewegung der Vorrichtung 200 entlang der Verfahrstrecke 201 durchgeführt werden.

Darauffolgend wird in einem Verfahrensschritt 101 wenigstens ein Objekt O1, O2, O3 in einer Umgebung 217 der Bewegungsstrecke 201 erkannt und Eigenschaften E1', E2', E3' des Objekts O1, O2, O3 durch die zweite Recheneinheit 205 basierend auf den Sensorsignalen der wenigstens einen Sensoreinheit 207 der Vorrichtung 200 ermittelt.

In einem Verfahrensschritt 109 wird ferner das wenigstens eine weitere Objekt OR durch die zweite Recheneinheit 205 erkannt und Eigenschaften ER' des weiteren Objekts OR ermittelt.

Die Verfahrensschritte 101 und 109 können zeitgleich durch die zweite Recheneinheit 205 gemäß einer gemeinsamen Objekterkennung durchgeführt werden. Alternativ hierzu können die Verfahrensschritt 101, 109 zeitlich nacheinander durchgeführt werden.

Darauffolgend wird in einem Verfahrensschritt 103 wenigstens eine Eigenschaft P1', P2', P3' der durch die zweite Recheneinheit 205 ermittelten Eigenschaften E1', E2', E3' des Objekts O1, O2, O3 mit einer entsprechenden Referenz P1, P2, P3 durch die Recheneinheit 203 verglichen. Gemäß der in Figur 1 beschriebenen Ausführungsform kann die Referenz P1, P2, P3 durch vorbekannte Eigenschaften P1, P2, P3 des jeweiligen Objekts O1, O2, O3 gegeben sein. Die vorbekannten Eigenschaften P1, P2, P3 der an der Verfahrstrecke 201 angeordneten Objekte O1, O2, O3 können beispielsweise in einer Kartendarstellung 213 der Verfahrstrecke 201, in der die Objekte O1, O2, O3, OR inklusive der vorbekannten Eigenschaften P1, P2, P3, PR berücksichtigt sind, der Recheneinheit 203 bereitgestellt sein.

In einem Verfahrensschritt 111 wird analog wenigstens eine Eigenschaft PR' der durch die zweite Recheneinheit 205 gemäß der Objekterkennung ermittelten Eigenschaften ER' des weiteren Objekts OR mit einer weiteren Referenz PR durch die Recheneinheit 203 verglichen. Die weitere Referenz PR kann analog durch vorbekannte Eigenschaften des weiteren Objekts OR gegeben sein, die in einer entsprechenden Kartendarstellung 213 der Recheneinheit 203 bereitgestellt sind.

Ergeben die Vergleiche, dass die wenigstens eine Eigenschaft P1', P2', P3' der durch die zweite Recheneinheit 205 ermittelten Eigenschaften E1', E2', E3' des Objekts O1, O2, O3 und die wenigstens eine Eigenschaft PR' der durch die zweite Recheneinheit 205 ermittelten Eigenschaften ER' des weiteren Objekts OR die vorbestimmte Ähnlichkeit zu den Referenzen P1, P2, P3 bzw. der weiteren Referenz PR aufweisen, so wird die Objekterkennung als funktionsfähig und mit der erwarteten Qualität beurteilt. Durch den Vergleich der wenigstens einen Eigenschaft P1', P2', P3' bzw. PR' mit den jeweils vorbekannten Eigenschaften P1, P2, P3, PR der Objekte O1, O2, O3, OR kann mit einer gewissen Wahrscheinlichkeit vorausgesagt werden, dass alle bzw. eine Mehrzahl der durch die zweite Recheneinheit 205 ermittelten Eigenschaften E1', E2', E3' des wenigstens einen Objekts O1, O2, O3 fehlerfrei und korrekt ermittelt wurden. Hierauf basierend wird somit in einem Verfahrensschritt 105 die Steuerung der Vorrichtung 200 basierend auf den durch die zweite Recheneinheit 205 ermittelten Eigenschaften E1', E2', E3' bewirkt.

Alternativ können die durch die zweite Recheneinheit 205 ermittelten Eigenschaften ER' des weiteren Objekts OR ebenfalls im Verfahrensschritt 105 zur Steuerung der Vorrichtung 200 berücksichtigt werden.

In einem parallel zu den Verfahrensschritten 103, 111 ausgeführten Verfahrensschritt 115 wird hingegen überprüft, ob durch die Objekterkennung der zweiten Recheneinheit 205 alle entlang der Verfahrstrecke 201 angeordneten Objekte O1, O2, O3, OR erkannt wurden. Hierzu kann beispielsweise ein Vergleich der in der Objekterkennung durch die zweite Recheneinheit 205 erkannten Objekte O1, O2, O3, OR mit den in der Kartendarstellung 213 der Verfahrstrecke 201 aufgeführten Objekte O1, O2, O3, OR durchgeführt werden.

Wird bei der Überprüfung im Verfahrensschritt 115 hingegen ermittelt, dass im Zuge der Objekterkennung durch die zweite Recheneinheit 205 wenigstens ein Objekt nicht erkannt wurde, so kann der Erkennungshorizont, in dem Objekte durch die Objekterkennung erkannt werden müssen, entsprechend eingeschränkt werden. Sollten beispielsweise drei Objekte in jeweils 100, 300 und 500 Metern Entfernung erkannt werden, ist jedoch lediglich eine Erkennung der ersten beiden Objekte in 100 und 300 Metern Entfernen erfolgreich, so werden ausschließlich die Eigenschaften der erkannten Objekte zur Überprüfung der Objekterkennung und zur Steuerung der Vorrichtung berücksichtigt. Entsprechend wird in einem weiteren Verfahrensschritt 117 eine Geschwindigkeit der Vorrichtung 200 reduziert und/oder ein Warnsignal ausgegeben.

Wird in den Verfahrensschritten 103, 111 hingegen ermittelt, dass wenigstens eine der durch die zweite Recheneinheit 205 ermittelten Eigenschaften P1', P2', P3' des Objekts O1, O2, O3 oder der Eigenschaft PR' des weiteren Objekts OR nicht die geforderte Ähnlichkeit zu der Referenz P1, P2, P3 bzw. der weiteren Referenz PR aufweist, so wird in einem Verfahrensschritt 113 ebenfalls die Geschwindigkeit der Vorrichtung 200 reduziert und/oder ein entsprechendes Warnsignal ausgegeben.

Das Steuern der Vorrichtung 200 im Verfahrensschritt 105 kann hierbei das übliche Verfahren eines Fahrzeugs, eines Schienenfahrzeugs oder eines Roboters entlang einer Verfahrstrecke 201 umfassen.

Die ermittelten Eigenschaften E1', E2', E3' des Objekts O1, O2, O3 können hierbei bei der Steuerung der Vorrichtung 200 derart berücksichtigt werden, dass beispielsweise entsprechenden Objekten O1, O2, O3 ausgewichen wird. Alternativ können die Markierungen der Objekte O1, O2, O3 für die Steuerung der Vorrichtung 200 berücksichtigt werden, insbesondere wenn die Objekte O1, O2, O3 als Warnsignale oder Verkehrsschilder ausgebildet sind und für das Verfahren auf der Verfahrstrecke 201 betreffende Informationen bereitstellen.

Gemäß der zu Figur 1 gezeigten Ausführungsform können eine beliebige Anzahl von Objekten O1, O2, O3 bzw. weiteren Objekten OR in der Objekterkennung erkannt und die entsprechend ermittelten Eigenschaften zur Beurteilung der Funktionsweise der Objekterkennung berücksichtigt werden.

FIG 3 zeigt eine schematische Darstellung eines Computerprogrammprodukts 300.

Figur 3 zeigt ein Computerprogrammprodukt 300, umfassend Befehle, die bei der Ausführung des Programms durch eine Recheneinheit dieses veranlassen, das Verfahren nach einer der oben genannten Ausführungsformen auszuführen. Das Computerprogrammprodukt 300 ist in der gezeigten Ausführungsform auf einem Speichermedium 301 gespeichert. Das Speichermedium 301 kann hierbei ein beliebiges aus dem Stand der Technik bekanntes Speichermedium sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 100: Verfahren zum Steuern einer Vorrichtung
- 101: Bestimmen von Eigenschaften eines Objekts
- 103: Vergleichen einer Eigenschaft mit einer Referenz
- 105: Steuern des Stellgliedes
- 107: Bereitstellen eines weiteren Objekts
- 109: Bestimmen von Eigenschaften des weiteren Objekts
- 111: Vergleichen einer Eigenschaft mit einer Referenz
- 113: Steuern des Stellgliedes
- 115: Bereitstellen eines weiteren Objekts
- 117: Bestimmen von Eigenschaften des weiteren Objekts

- 200: Vorrichtung
- 201: Verfahrstrecke
- 203: Recheneinheit
- 205: zweite Recheneinheit
- 207: Sensoreinheit
- 209: künstliche Intelligenz
- 211: Steuerglied
- 213: Kartendarstellung
- 215: Datenverbindung
- 217: Umgebung
- 219: weitere Umgebung
- 221: Frontbereich

- 300: Computerprogrammprodukt
- 301: Speichermedium

- O1: Objekt
- O2: Objekt
- O3: Objekt
- E1: Eigenschaften des Objekts
- E2: Eigenschaften des Objekts
- E3: Eigenschaften des Objekts
- E1': durch zweite Recheneinheit bestimmte Eigenschaften
- E2': durch zweite Recheneinheit bestimmte Eigenschaften
- E3': durch zweite Recheneinheit bestimmte Eigenschaften
- P1': durch zweite Recheneinheit bestimmte eine Eigenschaft
- P2': durch zweite Recheneinheit bestimmte eine Eigenschaft
- P3': durch zweite Recheneinheit bestimmte eine Eigenschaf
- P1: Referenz
- P2: Referenz
- P3: Referenz

- OR: weiteres Objekt
- ER: Eigenschaften des weiteren Objekts
- ER': durch zweite Recheneinheit bestimmte Eigenschaften
- PR': durch zweite Recheneinheit bestimmte eine Eigenschaft
- PR: Referenz

- D1: Abstand des Objekts zur Vorrichtung
- D2: Abstand des Objekts zur Vorrichtung
- D2: Abstand des Objekts zur Vorrichtung
- DR: Abstand des weiteren Objekts zur Vorrichtung

- MD: Bewegungsrichtung

## Patentansprüche

1. Verfahren (100) zum Steuern einer Bewegung einer Vorrichtung (200) entlang einer Verfahrstrecke (201) mit einer Recheneinheit (203), umfassend:
- Erkennen (101) eines Objekts (O1, O2, O3) in einer Umgebung (217) der Bewegungsstecke (201) und Ermitteln von Eigenschaften (E1', E2', E3') des Objekts (O1, O2, O3) durch eine zweite Recheneinheit (205) basierend auf Sensorsignalen wenigstens einer Sensoreinheit (207);
- Vergleichen (103) wenigstens einer Eigenschaft (P1', P2', P3') der durch die zweite Recheneinheit (205) ermittelten Eigenschaften (E1', E2', E3') des Objekts (O1, O2, O3) mit einer entsprechenden Referenz (P1, P2, P3) durch die Recheneinheit (203); und
- Steuern (105) der Bewegung der Vorrichtung (201) entlang der Verfahrstrecke (201) unter Berücksichtigung der durch die zweite Recheneinheit (205) ermittelten Eigenschaften (E1', E2', E3') des Objekts (O1, O2, O3) durch die Recheneinheit (203), wenn die wenigstens eine Eigenschaft (P1', P2', P3') der durch die zweite Recheneinheit (205) ermittelten Eigenschaften (E1', E2', E3') des Objekts (O1, O2, O3) eine vorgegebene Ähnlichkeit zu der Referenz (P1, P2, P3) aufweist.

2. Verfahren (100) nach Anspruch 1, ferner umfassend:
- Bereitstellen (107) eines weiteren Objekts (OR) in einer weiteren Umgebung (219) der Verfahrstrecke (201), wobei in der weiteren Umgebung (219) kein Objekt (O1, O2, O3) angeordnet ist;
- Erkennen (109) des weiteren Objekts (OR) und Ermitteln von Eigenschaften (ER') des weiteren Objekts (OR) durch die zweite Recheneinheit (205) basierend auf Sensorsignalen der Sensoreinheit (207);
- Vergleichen (111) wenigstens einer Eigenschaft (PR') der durch die zweite Recheneinheit (205) ermittelten Eigenschaften (ER') des weiteren Objekts (OR) mit einer weiteren Referenzen (PR) durch die Recheneinheit (203); und
- Steuern (105) der Bewegung der Vorrichtung (201) entlang der Verfahrstrecke (201) unter Berücksichtigung der durch die zweite Recheneinheit (205) ermittelten Eigenschaften (E1', E2', E3') des Objekts (O1, O2, O3) durch die Recheneinheit (203), wenn die wenigstens eine Eigenschaft (PR') der durch die zweite Recheneinheit (205) ermittelten Eigenschaften (ER') des weiteren Objekts (OR) eine vorgegebene Ähnlichkeit zu der weiteren Referenz (PR) aufweist.

3. Verfahren (100) nach einem der voranstehenden Ansprüche, wobei das Steuern der Vorrichtung umfasst:
Reduzieren (113) einer Geschwindigkeit der Vorrichtung (200) und/oder Ausgeben eines Warnsignals, wenn die wenigstens eine Eigenschaft (P1', P2', P3') der durch die zweite Recheneinheit (205) ermittelten Eigenschaften (E1', E2', E3') des Objekts (O1, O2, O3) nicht die vorgegebene Ähnlichkeit zu der Referenz (P1, P2, P3) aufweist, und/oder wenn die wenigstens eine Eigenschaft (PR') der durch die zweite Recheneinheit (205) ermittelten Eigenschaften (ER') des weiteren Objekts (OR) nicht die vorgegebene Ähnlichkeit zu der weiteren Referenz (PR) aufweist.

4. Verfahren (100) nach einem der voranstehenden Ansprüche, wobei die Referenz (P1, P2, P3) durch wenigstens eine vorbekannte Eigenschaft des Objekts (O1, O2, O3) gegeben ist, und/oder wobei die weitere Referenz (PR) durch wenigstens eine vorbekannte Eigenschaft des weiteren Objekts (OR) gegeben ist.

5. Verfahren (100) nach Anspruch 4, wobei das Objekt (O1, O2, O3) als ein Gebäude, eine Streckenbegrenzung, eine Streckenbeschilderung, eine Signalleuchte oder eine Vegetation ausgebildet ist, wobei das weitere Objekt (OR ) als eine Signaltafel ausgebildet ist, wobei die Eigenschaften und die vorbekannten Eigenschaften des Objekts (O1, O2, O3) und/oder die Eigenschaften und die vorbekannten Eigenschaften des weiteren Objekts (OR) eine Position des Objekts (O1, O2, O3) und/oder des weiteren Objekts (OR) relativ zur Verfahrstrecke (201) und/oder eine Markierung oder eine Signalcharakteristik des Objekts (O1, O2, O3) und/oder des weiteren Objekts (OR) umfassen.

6. Verfahren (100) nach Anspruch 4 oder 5, wobei die vorbekannten Eigenschaften des Objekts (O1, O2, O3) und/oder die vorbekannten Eigenschaften des weiteren Objekts (OR) der Recheneinheit (203) in einer Kartendarstellung der Verfahrstrecke (201) bereitgestellt sind.

7. Verfahren (100) nach Anspruch 6, ferner umfassend: Abgleichen (115) von in der Kartendarstellung angeführten Objekten mit von der zweiten Recheneinheit (205) erkannten Objekten (O1, O2, O3, OR); und wobei das Steuern (105) der Vorrichtung umfasst:
Reduzieren (117) der Geschwindigkeit der Vorrichtung (200) und/oder Ausgeben eines Warnsignals, wenn durch die zweite Recheneinheit (205) ein in der Kartendarstellung angeführtes Objekt nicht erkannt wird.

8. Verfahren (100) nach einem der voranstehenden Ansprüche, wobei bei dem Vergleich der durch die zweite Recheneinheit (205) ermittelten Eigenschaft (P1', P2', P3', PR') des Objekts (O1, O2, O3) und/oder des weiteren Objekts (OR) mit der Referenz (P1, P2, P3) und/oder der weiteren Referenz (PR) ein Abstand (D1, D2, D3, DR) zwischen der Vorrichtung (200) und dem Objekt (O1, O2, O3) und/oder dem weiteren Objekt (OR) berücksichtigt wird, und wobei mit abnehmendem Abstand zwischen der Vorrichtung (200) und dem Objekt (O1, O2, O3) und/oder dem weiteren Objekt (OR) ein Wert der vorgegebenen Ähnlichkeit zwischen der durch die zweite Recheneinheit ermittelten Eigenschaft (P1', P2', P3') des Objekts (O1, O2, O3) und der Referenz (P1, P2, P3) und/oder zwischen der durch die zweite Recheneinheit (205) ermittelten Eigenschaft (PR') des weiteren Objekts (OR) und der weiteren Referenz (PR) erhöht wird.

9. Verfahren (100) nach einem der voranstehenden Ansprüche, wobei durch die zweite Recheneinheit (205) basierend auf den Sensorsignalen der Sensoreinheit (207) eine Mehrzahl von Objekten (O1, O2, O3) erkannt und für jedes Objekt (O1, O2, O3) Eigenschaften (E1', E2', E3') ermittelt werden, und wobei durch die Recheneinheit (203) für jedes Objekt (O1, O2, O3) eine Mehrzahl von durch die zweite Recheneinheit (205) ermittelte Eigenschaften (P1', P2', P3') mit einer Mehrzahl von Referenzen (P1, P2, P3) verglichen wird, und wobei die Steuerung der Vorrichtung (200) basierend auf den Eigenschaften (E1', E2', E3') der Mehrzahl von Objekten (E1, E2, E3) gesteuert wird, wenn für wenigstens ein Objekt (E1, E2, E3) der Mehrzahl von Objekten (E1, E2, E3) die ermittelten Eigenschaften (P1', P2', P3') zu den entsprechenden Referenzen (P1, P2, P3) die vorbestimmte Ähnlichkeit aufweisen.

10. Verfahren (100) nach einem der voranstehenden Ansprüche, wobei die zweite Recheneinheit (205) wenigstens eine zur Objekterkennung und Ermittlung von Eigenschaften trainierte künstliche Intelligenz (209) umfasst.

11. Verfahren (100) nach einem der voranstehenden Ansprüche, wobei die Sensoreinheit (207) eine optische Sensoreinheit und/oder eine Radarsensoreinheit umfasst, und wobei die Eigenschaften (E1, E2, E3, ER) der Objekte (O1, O2, O3, OR) optisch und/oder radartechnisch detektierbare Eigenschaften sind.

12. Verfahren (100) nach einem der voranstehenden Ansprüche, wobei die Vorrichtung (200) ein Fahrzeug, ein Schienenfahrzeug oder ein Robotor ist.

13. Computerprogrammprodukt (300) umfassend Befehle, die bei der Ausführung des Programms durch eine Recheneinheit diese veranlassen, das Verfahren (100) nach einem der vorhergehenden Ansprüche auszuführen.

14. Recheneinheit (203), die ausgebildet sind, um ein Verfahren (100) nach einem der Ansprüche 1 bis 12 auszuführen.

15. System (200) mit einer Recheneinheit (203) und einer zweiten Recheneinheit (205), die ausgebildet sind, um ein Verfahren (100) nach einem der Ansprüche 1 bis 12 auszuführen.
